(19) Europäisches Patentamt / European Patent Office / Office européen des brevets

(11) **EP 3 018 615 B1**

## (12) FASCICULE DE BREVET EUROPEEN

(45) Date de publication et mention
de la délivrance du brevet:
**27.02.2019 Bulletin 2019/09**

(21) Numéro de dépôt: **15192756.3**

(22) Date de dépôt: **03.11.2015**

(51) Int Cl.:
***G06K 9/00*** *(2006.01)*     ***G06K 9/62*** *(2006.01)*

(54) **PROCEDE DE COMPARAISON DE DONNEES AMELIORE**

VERBESSERTES DATENVERGLEICHSVERFAHREN

IMPROVED DATA-COMPARISON METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.11.2014 FR 1460690**

(43) Date de publication de la demande:
**11.05.2016 Bulletin 2016/19**

(73) Titulaire: **Idemia Identity & Security France
92400 Courbevoie (FR)**

(72) Inventeurs:
- **BOHNÉ, Julien
92130 ISSY LES MOULINEAUX (FR)**
- **GENTRIC, Stéphane
92130 ISSY LES MOULINEAUX (FR)**

(74) Mandataire: **Regimbeau
20, rue de Chazelles
75847 Paris Cedex 17 (FR)**

(56) Documents cités:
- **SIMON PRINCE ET AL: "Probabilistic Models for Inference about Identity", IEEE TRANSACTIONS ON PATTERN ANALYSIS AND MACHINE INTELLIGENCE, IEEE COMPUTER SOCIETY, USA, vol. 34, no. 1, 1 janvier 2012 (2012-01-01), pages 144-157, XP011389981, ISSN: 0162-8828, DOI: 10.1109/TPAMI.2011.104**
- **DONG CHEN ET AL: "Bayesian Face Revisited: A Joint Formulation", 7 octobre 2012 (2012-10-07), COMPUTER VISION ECCV 2012, SPRINGER BERLIN HEIDELBERG, BERLIN, HEIDELBERG, PAGE(S) 566 - 579, XP047018987, ISBN: 978-3-642-33711-6 * Section 2.2 ***
- **XIAOGANG WANG ET AL: "A Unified Framework for Subspace Face Recognition", IEEE TRANSACTIONS ON PATTERN ANALYSIS AND MACHINE INTELLIGENCE, IEEE COMPUTER SOCIETY, USA, vol. 26, no. 9, 1 septembre 2004 (2004-09-01), pages 1222-1228, XP011115582, ISSN: 0162-8828, DOI: 10.1109/TPAMI.2004.57**
- **CAO XUDONG ET AL: "A Practical Transfer Learning Algorithm for Face Verification", 2013 IEEE INTERNATIONAL CONFERENCE ON COMPUTER VISION, IEEE, 1 décembre 2013 (2013-12-01), pages 3208-3215, XP032573098, ISSN: 1550-5499, DOI: 10.1109/ICCV.2013.398 [extrait le 2014-02-28]**

**Description**

DOMAINE DE L'INVENTION

L'invention concerne un procédé de comparaison de données obtenues à partir d'un capteur ou une interface, pour établir un taux de similarité entre les données. L'invention concerne en particulier un procédé de comparaison de données par apprentissage automatique.

ETAT DE LA TECHNIQUE

De nombreuses tâches implémentées par exemple dans le domaine de la vision par ordinateur (ou vision numérique) nécessitent de comparer des données complexes telles que des images, pour établir un score de similarité entre ces données.

Par exemple, dans le domaine de l'authentification biométrique, des images de visages d'individus sont comparées entre elles pour déterminer si les images ont été obtenues à partir du même individu.

Pour traiter ce genre de problématique, il est connu de mettre en oeuvre, sur les données à comparer, une extraction de caractéristiques qui transforme les données à comparer en des vecteurs caractéristiques, et ensuite de calculer une fonction de similarité entre les vecteurs caractéristiques.

La fonction de similarité calculée comprend généralement des paramètres a priori inconnus. Ces paramètres sont déterminés et progressivement optimisés par apprentissage automatique (appelé en anglais « machine learning »). Pour ce faire, une unité de traitement met en oeuvre des opérations de comparaisons de données sur un ensemble de données connues d'une base de données, compare les résultats fournis par la fonction de similarité à un résultat réel, et optimise en conséquence les paramètres de la fonction de similarité pour rendre ses résultats plus fiables.

Par exemple, on connaît d'après la publication de D. Chen, X. Cao,, L. Wang, F. Wen et J. Sun, Bavesian Face Revisited : A Joint Formulation, dans ECCV, 2012, une méthode d'apprentissage de fonction de similarité entre des données, dans laquelle les données sont modélisées par une somme de deux variables Gaussiennes indépendantes qui sont la moyenne de la classe à laquelle appartient une donnée, et la variation de la donnée par rapport à la moyenne.

A titre d'exemple, dans le cas où les données sont des images de visages, la classe correspond à l'identité de l'individu, et donc la variation par rapport à la moyenne de la classe correspond à tous les changements pouvant apparaître entre une image de visage moyen de l'individu et une image prise dans des circonstances différentes :

- Eclairage, ombres sur l'image
- Pose du visage sur l'image,
- Expression du visage,
- Flou localisé, etc.

Cependant l'amélioration des performances de la comparaison résultant de l'apprentissage automatique est limitée par la prise en compte de données de qualités variables dans la base de données. Il en résulte une dégradation des performances de la fonction de similarité élaborées, et donc de la qualité de la comparaison réalisée. La méthode de comparaison proposée n'est donc pas entièrement fiable.

PRESENTATION DE L'INVENTION

L'invention a pour but de proposer un procédé de comparaison de données présentant des performances accrues par rapport à l'art antérieur. L'invention concerne un procédé de comparaison de deux données selon la revendication 1, un procédé de comparaison de deux images de visages selon la revendication 2, un produit programme d'ordinateur selon la revendication 9 pour la mise en oeuvre de ces procédés, et un système selon la revendication 10 comprenant une unité de traitement mettant en oeuvre ces procédés.

A cet égard, l'invention a pour objet un procédé de comparaison de deux données informatiques obtenues à partir d'un capteur ou une interface, mis en oeuvre par des moyens de traitement d'une unité de traitement, le procédé comprenant le calcul d'une fonction de similarité entre deux vecteurs de caractéristiques des données à comparer, caractérisé en ce que chaque vecteur de caractéristiques d'une donnée est modélisé comme une somme de variables gaussiennes, lesdites variables comprenant :

- une moyenne d'une classe d'appartenance du vecteur,
- une déviation intrinsèque et
- un bruit d'observation du vecteur,

chaque vecteur de caractéristiques étant associé à un vecteur de qualités comprenant des informations sur le bruit d'observation du vecteur de caractéristiques,

et en ce que la fonction de similarité est calculée à partir des vecteurs de caractéristiques et des vecteurs de qualité associés.

- Avantageusement, mais facultativement, le procédé selon l'invention peut en outre comprendre au moins l'une des caractéristiques suivantes : la fonction de similarité est le logarithme du ratio entre la densité de probabilité $P(x,y|H_{sim},S_{\varepsilon x},S_{\varepsilon y})$ des vecteurs de caractéristiques, avec les vecteurs appartenant à une même classe, et la densité de probabilité $P(x,y|H_{dis},S_{\varepsilon x},S_{\varepsilon y})$ des vecteurs de caractéristiques, avec les vecteurs appartenant à deux classes distinctes.

- la fonction de similarité est en outre calculée en fonction des matrices de covariances des composantes des vecteurs de caractéristiques, et la matrice de covariances du bruit d'observation de chaque vecteur de caractéristiques est obtenue en fonction du vecteur de qualité associé.

- Le procédé comprend en outre la mise en oeuvre d'un algorithme d'apprentissage pour la détermination des matrices de covariances des moyennes des classes d'appartenance des vecteurs et des déviations des vecteurs par rapport aux moyennes de classe.

- l'algorithme d'apprentissage est un algorithme de type espérance - maximisation.

- la fonction de similarité est fournie par la formule :

$$LR\left(x,y\middle|S_{\varepsilon_x},S_{\varepsilon_y}\right)$$
$$= x^T\left(A - \left(S_\mu + S_\omega + S_{\varepsilon_x}\right)^{-1}\right)x + y^T\left(C - \left(S_\mu + S_\omega + S_{\varepsilon_y}\right)^{-1}\right)y$$
$$+ 2x^T By - \log\left|S_\mu + S_\omega + S_{\varepsilon_x}\right| - \log|A| + constante$$

où

$$A = \left(S_\mu + S_\omega + S_{\varepsilon_x} - S_\mu\left(S_\mu + S_\omega + S_{\varepsilon_y}\right)^{-1}S_\mu\right)^{-1}$$
$$B = -AS_\mu\left(S_\mu + S_\omega + S_{\varepsilon_y}\right)^{-1}$$
$$C = \left(S_\mu + S_\omega + S_{\varepsilon_y}\right)^{-1}\left(I + S_\mu AS_\mu\left(S_\mu + S_\omega + S_{\varepsilon_y}\right)^{-1}\right)$$

et où $S_\mu$ est la matrice de covariance des moyennes des classes (matrice de covariance inter-classe), $S_\omega$ est la matrice de covariances des déviations par rapport à une moyenne (matrice de covariance intra-classe), et $S_{\varepsilon x}$ et $S_{\varepsilon y}$ sont les matrices de covariances des bruits d'observation respectivement des vecteurs x et y.

- les données informatiques issues de capteurs ou d'interfaces sont des données représentatives d'objets physiques ou de grandeurs physiques.

- les données informatiques issues de capteurs ou d'interfaces sont des images, et les vecteurs de caractéristiques sont obtenus par application d'au moins un filtre sur les images.

- les composantes du vecteur de qualités sont générées en fonction du type de donnée et de la nature des caractéristiques composant le vecteur de caractéristiques.

- Le procédé comprend en outre la comparaison du résultat du calcul de la fonction de similarité à un seuil pour déterminer si les données appartiennent à une classe commune.

L'invention a aussi pour objet un produit programme d'ordinateur, comprenant des instructions de code pour la mise en oeuvre du procédé la description qui précède, quand il est exécuté par des moyens de traitement d'une unité de traitement.

Un autre objet de l'invention est un système comprenant :

- une base de données comprenant une pluralité de données dites étiquetées,
- une unité d'acquisition de données, et

- une unité de traitement, comprenant des moyens de traitement adaptés pour construire, à partir de deux données, deux vecteurs de caractéristiques et deux vecteurs de qualités associés, ladite unité de traitement étant en outre adaptée pour comparer les données par la mise en oeuvre du procédé de comparaison selon la description qui précède.

Le procédé proposé permet de tenir compte des qualités des données dans le calcul de la fonction de similarité entre les données. Ceci permet d'établir une pondération variable entre des données de bonne qualité et des données plus incertaines.

Par exemple, dans le cas de l'application du procédé selon l'invention à une comparaison d'images, les zones d'ombres ou de flou d'une image ne sont pas prises en compte par la fonction de similarité avec une pondération aussi importante que les zones bien visibles et bien nettes.

Ceci permet une performance accrue dans la comparaison des données.

En outre l'apprentissage automatique permet d'optimiser les paramètres de la fonction de similarité pour améliorer les performances du procédé de comparaison.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente un exemple de système adapté pour la mise en oeuvre d'un procédé de comparaison.
- La figure 2 représente les principales étapes d'un procédé de comparaison de données selon un mode de réalisation de l'invention.

DESCRIPTION DETAILLEE D'AU MOINS UN MODE DE REALISATION DE L'INVENTION

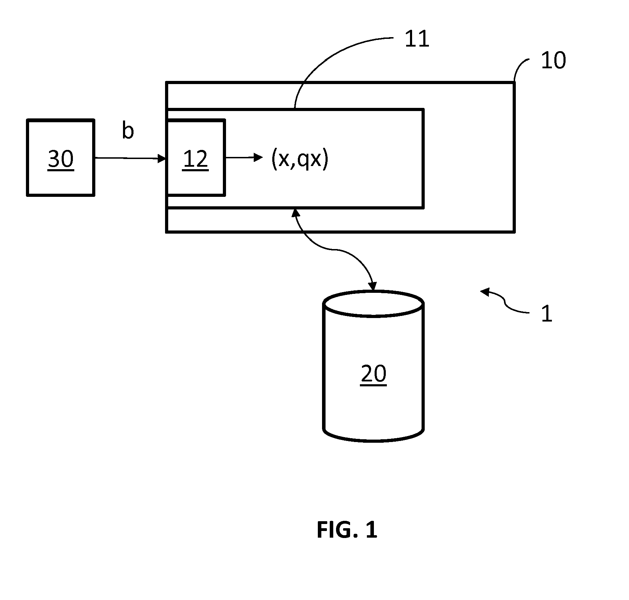

En référence à la figure 1, on a représenté un système 1, comprenant une unité de traitement 10, comprenant des moyens de traitement 11 pour la mise en oeuvre du procédé de comparaison de données informatiques décrit ci-après.

L'unité de traitement 10 peut par exemple être un circuit intégré, et les moyens de traitement un processeur.

Le système 1 comprend en outre avantageusement une base de données 20, éventuellement distante, mémorisant une pluralité de données à partir desquelles l'unité de traitement 10 peut mettre en oeuvre un apprentissage automatique décrit ci-après.

Le système 1 comprend enfin une unité d'acquisition de données 30, ou, dans le cas où l'unité d'acquisition de données 30 est indépendante du système, une interface (non représentée) adaptée pour communiquer avec une telle unité. De cette façon le système 1 peut recevoir et traiter des données b, notamment pour les comparer par le procédé décrit ci-après.

En fonction de la nature des données à comparer dans le procédé décrit ci-après, l'unité d'acquisition de données peut être de tout type, et par exemple un capteur optique (appareil photographique, caméra vidéo, scanneur), acoustique, un capteur d'empreintes digitales, de mouvement, etc. Il peut aussi s'agir d'une interface Homme-Machine (clavier, tablette avec interface tactile) pour enregistrer une donnée saisie par un opérateur, telle que par exemple un texte, une figure, etc.

Les données informatiques b sont obtenues par l'unité d'acquisition 30, et sont donc issues d'un capteur ou d'une interface, par exemple une interface Homme-Machine. Elles peuvent être des données représentatives d'un objet physique, par exemple une image, un schéma, un enregistrement, une description, ou représentatives d'une grandeur physique (électrique, mécanique, thermique, acoustique, etc.), comme par exemple une donnée enregistrée par un capteur.

Les moyens de traitement 11 de l'unité de traitement sont avantageusement configurés pour mettre en oeuvre le procédé de comparaison de données décrit ci-après, par l'exécution d'un programme approprié.

Pour mettre en oeuvre ce procédé, les moyens de traitement 11 comprennent aussi avantageusement un module extracteur de caractéristiques 12 adapté pour générer, à partir d'une donnée informatique d'entrée b communiquée par une unité d'acquisition de données 30, une extraction de caractéristiques pour générer un vecteur de caractéristiques x associé à la donnée ainsi qu'un vecteur de qualité qx de la donnée, associé au vecteur de caractéristiques.

Le vecteur de qualité qx peut être un vecteur de même taille que le vecteur de caractéristiques, dont chaque élément indique une qualité de l'information de l'élément correspondant du vecteur de caractéristiques x. Alternativement, le vecteur de qualité qx peut être de taille quelconque. Sa génération dépend de la nature de la donnée b.

Par exemple, l'extraction de caractéristiques peut être mise en oeuvre en appliquant à la donnée b un ou plusieurs filtres conçus à cet effet, le cas échéant suivi d'un traitement sur le résultat du filtre (par exemple calcul d'histogramme, etc.).

La génération du vecteur de qualité dépend quant à elle du type de donnée b et de la nature des caractéristiques du vecteur de caractéristiques x - c'est-à-dire les éléments composants le vecteur x. Chaque élément du vecteur de qualité tient compte d'informations intrinsèques de la donnée associées aux caractéristiques particulières du vecteur de caractéristiques.

Par exemple, dans le domaine du traitement du signal ou du traitement d'images, quand la donnée est une image ou une acquisition d'un signal représentatif acquis par un capteur, il est courant d'utiliser comme vecteur de caractéristiques x une représentation fréquentielle (par exemple une transformée de Fourier) ou spatio-fréquentielle (par exemple une transformée en ondelettes) des données. Chaque composante du vecteur de caractéristiques ne dépend alors que de certaines bandes de fréquences.

Dans ces cas, les composantes hautes-fréquences de la donnée peuvent s'avérer plus discriminantes que des composantes basses-fréquences, mais également plus sensibles à des phénomènes comme la présence de bruit ou le manque de résolution du signal.

La quantité de bruit dans la donnée peut être déterminée en analysant son spectre d'énergie, si la donnée est un signal acquis par un capteur, ou sa résolution intrinsèque, si la donnée est une image. Par exemple on connaît l'article de Pfenning et Kirchner pour déterminer la résolution d'une image : « Spectral Methods to Determine the Exact Scaling Factor of Resampled Digital Images », ISCCP, 2012.

Le vecteur de qualité qx généré en fonction du vecteur de caractéristiques x et de la qualité intrinsèque de la donnée peut alors être construit comme suit :

- Aux composantes du vecteur de caractéristiques sensibles aux composantes basses-fréquences de la donnée, on attribue une qualité élevée,
- Aux composantes du vecteur de caractéristiques sensibles aux composantes hautes-fréquences de la donnée, et présentant un niveau de bruit faible et/ou une résolution élevée, on attribue une qualité élevée,
- Aux composantes du vecteur de caractéristiques sensibles aux composantes hautes-fréquences et présentant un niveau de bruit élevé et/ou une résolution faible, on attribue une qualité faible.

Les valeurs de qualité attribuées et les seuils en niveau de bruit ou résolution peuvent être déterminés expérimentalement de manière à optimiser les performances du procédé de comparaison sur une base de validation.

Selon un autre exemple, la donnée est une image de visage.

Selon cet exemple, un vecteur de caractéristiques peut être obtenu, comme montré dans l'article de Chen et al., « Blessing of Dimensionality : High-dimensional Feature and Its Efficient Compression for Face Vérification », VCPR, 2013, en concaténant des descripteurs locaux extraits dans le voisinage de certains points sémantiques du visage (par exemple bout du nez, commissures des lèvres, des yeux, etc.).

Cette représentation a l'avantage d'être plus robuste à des variations de pose que les méthodes qui extraient les descripteurs sur une grille régulière.

Or, l'extraction de ces caractéristiques comprend une étape de détection de ces points. Au cours de cette étape, on peut utiliser un détecteur qui, en plus de fournir la position la plus probable de chaque point du visage sur l'image, fournit aussi une information traduisant la confiance dans la précision de la détection.

On connaît par exemple de l'article de Rapp et al., « Blessing of Dimensionality : « Multiple kernel learning SVM and statistical validation for facial landmark détection », Automatic Face & Gesture Récognition, 2011 une mesure mesure de la distance à l'hyperplan séparateur dans le cas d'un détecteur à base de machines à vecteurs de support (en anglais SVM pour Support Vector Machine).

Un autre exemple est produit dans l'article de Dantone et al. « Real-time Facial Feature Detection using Conditional Rregression Forests", CVPR, 2012, dans lequel une mesure de la confiance est fournie par un nombre de votes, pour un détecteur utilisant une forêt d'arbres de régression.

Ces informations de confiance peuvent être utilisées pour créer une qualité associée à chaque composante du vecteur de caractéristiques, en lui attribuant la qualité de la détection du point sémantique du visage auquel elle correspond.

Selon encore un autre exemple, quand l'image du visage est une image de face générée à partir d'une image dans laquelle le visage n'est pas de face, par exemple en appliquant le procédé décrit dans la demande n° FR 2 998 402, le vecteur de qualité peut être un indice de confiance, cet indice étant relativement plus élevé pour des points du visage apparaissant sur l'image d'origine, et relativement moins élevé pour des points du visage n'apparaissant pas sur l'image d'origine, et reconstruits par extrapolation.

De manière plus générale, quand la donnée est une image, le vecteur de qualité peut être obtenu par une mesure locale de flou.

Alternativement, le module extracteur de caractéristiques est un module de l'unité d'acquisition 30, permettant à l'unité d'acquisition de communiquer directement aux moyens de traitement 11 un vecteur de caractéristique et un vecteur de qualité associé.

*Procédé de comparaison de données*

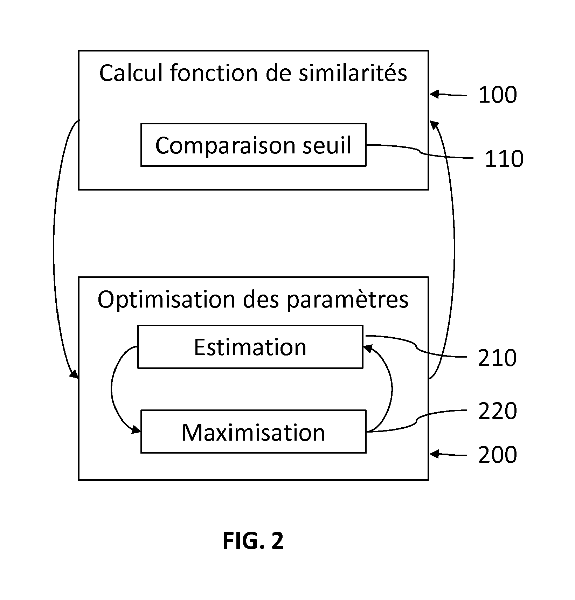

On va maintenant décrire, en référence à la figure 2, le procédé de comparaison de données mis en oeuvre par les moyens de traitement 11 de l'unité de traitement.

Ce procédé comprend la comparaison de deux données, en calculant une fonction de similarité 100 entre deux vecteurs de caractéristiques x et y de même dimension respectivement obtenus à partir des données, et en réalisant un apprentissage automatique 200 des paramètres de la fonction de similarité sur une base de données.

Dans ce procédé, chaque vecteur de caractéristiques est modélisé comme la somme de trois variables Gaussiennes indépendantes :

$$x = \mu + \omega + \varepsilon$$

Où:

- $\mu$ est la moyenne d'une classe à laquelle appartient le vecteur x,
- $\omega$ est la déviation intrinsèque du vecteur x par rapport à la moyenne, et
- $\varepsilon$ est le bruit d'observation.

Une classe est un ensemble de vecteurs de caractéristiques considérés comme similaires. Deux vecteurs de caractéristiques sont considérés similaires si leur comparaison par la fonction de similarité produit un résultat supérieur à un seuil, ce seuil étant déterminé de façon empirique.

Ainsi par exemple, dans le cas où les données sont des images de visage, une classe correspond avantageusement à un individu. Ainsi, en comparant deux vecteurs de caractéristiques de plusieurs données, les données sont considérées comme similaires si elles proviennent du même individu.

Pour revenir au modèle introduit précédemment, deux vecteurs de caractéristiques appartenant à une même classe présentent donc une valeur de $\mu$ identique, mais des valeurs de $\omega$ et de $\varepsilon$ différentes.

Dans les cas où les vecteurs de caractéristiques appartiennent à des classes différentes, les trois variables sont complètement indépendantes.

On considère que ces trois variables suivent une distribution normale multivariée centrée sur 0, et on note les matrices de covariances respectives $S_\mu$, $S_\omega$, et $S_\varepsilon$. $S_\mu$ est appelée matrice de covariance inter-classe, $S_\omega$ matrice de covariance intra-classe et $S_\varepsilon$ matrice de covariance du bruit d'observation.

$S_\mu$, $S_\omega$ sont des inconnues qui sont communes à tous les vecteurs de caractéristiques.

$S_\varepsilon$ est au contraire connue, car elle est obtenue à partir du vecteur de qualité associé au vecteur de caractéristiques, par le module extracteur de caractéristiques. Elle est de même taille que le vecteur de caractéristiques associé.

Par exemple, en formant l'hypothèse que les bruits d'observations ne sont pas corrélés entre eux, $S_\varepsilon$ peut être bien approximée par une matrice diagonale.

Les éléments de cette matrice diagonale, correspondant alors à la variance des composantes du vecteur de qualité, peuvent être obtenus à partir de ce vecteur.

La variance peut par exemple être imposée en appliquant aux composantes du vecteur de qualité qx une fonction sigmoïde de type $f(q_x)=1/e^{aqx+b}$. Les coefficients a et b peuvent être choisis pour associer un niveau de variance déterminé à un niveau de qualité.

Par exemple, une qualité élevée peut être associée à une variance nulle, une qualité très faible peut être associée à la variance maximale, les variances intermédiaires correspondant à des qualités intermédiaires.

De manière générale, comme le vecteur de qualité et le vecteur de caractéristiques dépendent du type de donnée, la fonction de transfert qui transforme un vecteur de qualité en une matrice de covariance du bruit est spécifique au vecteur de qualité et au vecteur de caractéristiques associés.

Dans la suite, on note $S_{\varepsilon x}$ la matrice de covariance du bruit de fond du vecteur x, obtenue à partir du vecteur de qualité qx et $S_{\varepsilon y}$ la matrice de covariance du bruit de fond du vecteur y, obtenue à partir du vecteur de qualité qy.

On note aussi $H_{sim}$ l'hypothèse selon laquelle deux vecteurs de caractéristiques appartiennent à une même classe, c'est-à-dire que les données correspondantes sont considérées comme similaires, et $H_{dis}$ l'hypothèse inverse selon laquelle les vecteurs de caractéristiques appartiennent à des classes différentes, et les données correspondantes sont considérées comme dissimilaires.

La probabilité conjointe de générer x et y, connaissant leurs matrices de covariance de bruit de fond respectives et considérant l'hypothèse $H_{sim}$ est notée $P(x,y|H_{sim},S_{\varepsilon x},S_{\varepsilon y})$. Cette probabilité suit une loi de Gauss, dont le centre est nul et la matrice de covariance est $S_{sim} : P\left(x, y \middle| H_{sim}, S_{\varepsilon_x}, S_{\varepsilon_y}\right) = \mathcal{N}([x^T y^T]^T | 0, S_{sim})$.

La probabilité conjointe de générer x et y, connaissant leurs matrices de covariance de bruit de fond respectives et considérant l'hypothèse $H_{dis}$, est notée $P(x,y|H_{dis},S_{\varepsilon_x},S_{\varepsilon_y})$. Cette probabilité suit une loi de Gauss dont le centre est nul et la martice de covariance est $S_{dis} : P\left(x, y \middle| H_{dis}, S_{\varepsilon_x}, S_{\varepsilon_y}\right) = \mathcal{N}([x^T y^T]^T | 0, S_{dis})$.

Les matrices $S_{sim}$ et $S_{dis}$ sont définies comme suit :

$$S_{sim} = \begin{bmatrix} S_\mu + S_\omega + S_{\varepsilon_x} & S_\mu \\ S_\mu & S_\mu + S_\omega + S_{\varepsilon_y} \end{bmatrix}$$

$$S_{dis} = \begin{bmatrix} S_\mu + S_\omega + S_{\varepsilon_x} & O \\ O & S_\mu + S_\omega + S_{\varepsilon_y} \end{bmatrix}$$

La densité de probabilité de $P(x,y|H_{sim},S_{\varepsilon_x},S_{\varepsilon_y})$ est de façon connue en soit, $\dfrac{1}{(2\pi)^{N/2}|S_{sim}|^{1/2}} e^{-\frac{1}{2}x^T S_{sim}^{-1} x}$, où $|S_{sim}|$ est le déterminant de $S_{sim}$, et N est la dimension d'un vecteur de caractéristiques.

La même expression est applicable mutatis mutandis pour la densité de probabilité de $P(x,y|H_{dis},S_{\varepsilon_x},S_{\varepsilon_y})$.

La fonction de similarité calculée pour comparer les deux données correspondant aux vecteurs x et y est le logarithme du ratio entre la densité de probabilité des vecteurs caractéristiques, avec les vecteurs appartenant à une même classe, et la densité de probabilité des vecteurs caractéristiques, avec les vecteurs appartenant à deux classes distinctes.

La fonction de similarité s'exprime donc comme suit :

$$LR\left(x, y \middle| S_{\varepsilon_x}, S_{\varepsilon_y}\right) = \log\left(\frac{P\left(x, y \middle| H_{sim}, S_{\varepsilon_x}, S_{\varepsilon_y}\right)}{P\left(x, y \middle| H_{dis}, S_{\varepsilon_x}, S_{\varepsilon_y}\right)}\right)$$

En utilisant l'expression de la densité de probabilité indiquée ci-avant, et, lors du développement de la fonction, en utilisant la formule d'inversion par bloc pour inverser les matrices $S_{sim}$ et $S_{dis}$, la fonction de similarité obtenue s'exprime comme suit :

$$LR\left(x, y \middle| S_{\varepsilon_x}, S_{\varepsilon_y}\right)$$
$$= x^T \left(A - \left(S_\mu + S_\omega + S_{\varepsilon_x}\right)^{-1}\right) x + y^T \left(C - \left(S_\mu + S_\omega + S_{\varepsilon_y}\right)^{-1}\right) y$$
$$+ 2x^T B y - \log\left|S_\mu + S_\omega + S_{\varepsilon_x}\right| - \log|A| + constante$$

Dans cette expression, A, B et C sont des termes résultant de l'inversion par blocs de $S_{sim}$ et sont exprimés respectivement comme suit :

$$A = \left(S_\mu + S_\omega + S_{\varepsilon_x} - S_\mu \left(S_\mu + S_\omega + S_{\varepsilon_y}\right)^{-1} S_\mu\right)^{-1}$$

$$B = -A S_\mu \left(S_\mu + S_\omega + S_{\varepsilon_y}\right)^{-1}$$

$$C = \left(S_\mu + S_\omega + S_{\varepsilon y}\right)^{-1} \left(I + S_\mu A S_\mu \left(S_\mu + S_\omega + S_{\varepsilon y}\right)^{-1}\right)$$

La constante ne dépend pas de x, y, $S_{\varepsilon x}$ ou $S_{\varepsilon y}$ et peut donc être ignorée.

On constate donc que la fonction de similarité LR tient compte des matrices de covariances $S_{\varepsilon x}$ et $S_{\varepsilon y}$ des bruits d'observations de x et y, et donc du vecteur de qualité associé à chaque vecteur de caractéristiques.

Ainsi, le résultat de la comparaison est impacté par la qualité - ou la confiance - associée à un vecteur de caractéristique, ce qui permet de pondérer avec une plus faible importance une caractéristique considérée de mauvaise qualité ou incertaine, et de pondérer avec une importance supérieure une caractéristique de bonne qualité ou avec une confiance plus importante.

Comme on le voit dans la suite, cette fonction de similarité est en outre paramétrée par un apprentissage automatique. Or, la prise en compte de la qualité associée à un vecteur de caractéristiques permet de minimiser l'impact d'une donnée de mauvaise qualité sur le paramétrage de la fonction.

Le procédé de comparaison est donc plus fiable.

De retour à la figure 2, le résultat de la comparaison est ensuite comparé lors d'une étape 110 à un seuil déterminé.

Ce seuil est avantageusement établi de façon empirique par mise en oeuvre, sur des vecteurs de caractéristiques connus (donc dont on sait s'ils appartiennent à une même classe ou non) d'une base de données, d'un nombre important de comparaisons.

Si le résultat de la fonction de similarité appliqué à x et y est supérieur au seuil déterminé, les données correspondantes sont considérées comme similaires. Sinon, les données sont considérées comme dissimilaires.

L'expression de la fonction de similarité LR indiquée précédemment fait apparaître que cette fonction est paramétrée par les matrices de covariance $S_\mu$, $S_\omega$, qui sont inconnues.

Par conséquent, le procédé comprend une étape 200 de détermination desdites matrices par apprentissage automatique.

Ce procédé est avantageusement mis en oeuvre par un algorithme du type espérance-maximisation (connu en anglais sous l'acronyme EM ou « Expectation-Maximization algorithm ») et est mis en oeuvre sur un ensemble de données stockées dans la base de données 20, ces données étant dites « étiquetées », c'est-à-dire qu'on connaît les classes respectives auxquelles elles appartiennent.

On note c une classe à laquelle appartient un nombre $m_c$ de vecteurs de caractéristiques, et on note $X_c = [x_{c,1}^T, \dots, x_{c,m_c}^T]^T$ la concaténation des vecteurs de caractéristiques de la classe et $S_{\varepsilon c,1}, \dots, S_{\varepsilon c,m_c}$ leurs matrices de covariance respectives de bruit d'observation.

On définit les variables latentes $Z_c = [\mu_c, \omega_{c,1}^T, \dots, \omega_{c,m_c}^T]^T$ pour chaque classe c, dans lesquelles chaque $\mu_c$ est la moyenne de la classe ; il n'en existe donc qu'une, et chaque $\omega_{c,i}$ est la déviation d'un vecteur de caractéristiques de la classe par rapport à cette moyenne (il en existe donc une par vecteur de caractéristiques).

Le paramètre à estimer par l'algorithme EM est $\Theta = \{S_\mu, S_\omega\}$.

L'algorithme d'espérance - maximisation est un algorithme itératif comprenant une première étape 210 d'estimation des paramètres de la distribution des variables latentes $P(Z_c|X_c,\overline{\Theta})$, où $\overline{\Theta}$ est la précédente estimation des paramètres.

A l'initialisation du procédé, $\overline{\Theta}$ est une première estimation empirique des paramètres.

L'initialisation du paramètre $S_\mu$ est avantageusement mise en oeuvre en calculant, pour chaque classe c, la moyenne empirique de la classe, puis en déterminant une matrice de covariance des moyennes.

L'initialisation du paramètre $S_\omega$ peut quant à elle être mise en oeuvre en calculant, pour chaque classe, la matrice de covariance des vecteurs de caractéristiques auxquels est retranchée la moyenne de la classe (c'est-à-dire des différences des vecteurs de caractéristiques par rapport à la moyenne), puis en calculant, la matrice de covariance moyenne sur toutes les classes.

Puis, l'algorithme comprend une étape 220 de maximisation, suivant $\Theta$ de l'espérance de la probabilité logarithmique sur les variables latentes $Z_c$ :

$$Q(\Theta, \overline{\Theta}) = \sum_c \int P(Z_c|X_c,\overline{\Theta}) \log P(X_c, Z_c|\overline{\Theta}) dZ_c$$

Pour mener à bien cette étape en minimisant le temps de calcul, on tient compte du fait que les variables

latentes $\omega_{c,i}$ sont conditionnellement indépendantes à $\mu_c$ fixée en factorisant $P(Zc|Xc,\bar{S}\mu,\bar{S}_\omega)$ comme suit :

$$P\big(Z_c|X_c,\bar{S}_\mu,\bar{S}_\omega\big) = P(\mu_c|X_c,\bar{S}_\mu,\bar{S}_\omega)\prod_{i=1}^{m_c} P(\omega_{c,i}|x_{c,i},\mu_c,\bar{S}_\mu,\bar{S}_\omega)$$

L'optimisation de $\mathcal{Q}$ $(\Theta,\overline{\Theta})$ au cours de l'étape 220 requiert de calculer les distributions de probabilités des paramètres $P(\mu_c|X_c,\bar{S}_\mu,\bar{S}_\omega)$ et $P(\omega_{c,i}|x_{c,i},\mu_c,\bar{S}_\mu,\bar{S}_\omega)$. Ces calculs sont détaillés ci-dessous :

$$P\big(\mu_c|X_c,\bar{S}_\mu,\bar{S}_\omega\big) \propto P(X_c|\mu_c,\bar{S}_\omega)P\big(\mu_c|\bar{S}_\mu\big)$$

$$\propto \prod_{i=1}^{m_c} \mathcal{N}\big(x_{c,i}\big|\mu_c,\bar{S}_\omega + S_{\varepsilon_{c,i}}\big)\mathcal{N}(\mu_c|0,\bar{S}_\mu)$$

$$\propto e^{-\frac{1}{2}\left(\mu_c^T\bar{S}_\mu^{-1}\mu_c+\sum_{i=1}^{m_c}(\mu_c-x_{c,i})^T\left(\bar{S}_\omega+S_{\varepsilon_{c,i}}\right)^{-1}(\mu_c-x_{c,i})\right)}$$

$$\propto e^{-\frac{1}{2}\left((\mu_c-b_{\mu_c})^T T_{\mu_c}^{-1}(\mu_c-b_{\mu_c})\right)} \tag{1}$$

Où:

$$T_{\mu_c} = \left(\bar{S}_\mu^{-1} + \sum_{i=1}^{m_c}(\bar{S}_\omega + S_{\varepsilon_{c,i}})^{-1}\right)^{-1}$$

Et

$$b_{\mu_c} = T_{\mu_c}\sum_{i=1}^{m_c}(\bar{S}_\omega + S_{\varepsilon_{c,i}})^{-1}x_{c,i}$$

La combinaison de l'équation (1) et du fait que $P(\mu_c|X_c,\bar{S}_\mu,\bar{S}_\omega)$ est une distribution de probabilités implique que

$$P\big(\mu_c|X_c,\bar{S}_\mu,\bar{S}_\omega\big) = \mathcal{N}(\mu_c|b_{\mu_c},T_{\mu_c}).$$

Par ailleurs,

$$P\big(\omega_{c,i}|X_c,\bar{S}_\mu,\bar{S}_\omega\big) = \int P\big(\mu_c|X_c,\bar{S}_\mu,\bar{S}_\omega\big)\,P\big(\omega_{c,i}|x_{c,i},\mu_c,\bar{S}_\omega\big)d\mu_c$$

$$\propto \int \mathcal{N}\big(\mu_c\big|b_{\mu_c},T_{\mu_c}\big)\,\mathcal{N}\big(\omega_{c,i}\big|0,\bar{S}_\omega\big)\mathcal{N}\big(\omega_{c,i}\big|x_{c,i}-\mu_c,S_{\varepsilon_{c,i}}\big)d\mu_c$$

$$\propto \int \mathcal{N}\big(\mu_c\big|b_{\mu_c},T_{\mu_c}\big)\mathcal{N}\big(\omega_{c,i}\big|R_{c,i}S_{\varepsilon_{c,i}}^{-1}(x_{c,i}-\mu_c),R_{c,i}\big)d\mu_c$$

Où

$$R_{c,i} = \left(S_{\varepsilon_{c,i}}^{-1} + \bar{S}_\omega^{-1}\right)^{-1}$$

$$\propto \int \mathcal{N}\big(\mu_c\big|b_{\mu_c},T_{\mu_c}\big)\mathcal{N}\big(\mu_c\big|x_{c,i}-R_{c,i}^{-1}S_{\varepsilon_{c,i}}\omega_{c,i},R_{c,i}^{-1}S_{\varepsilon_{c,i}}R_{c,i}^{-1}\big)d\mu_c$$

$$P\left(\omega_{c,i}\middle|X_c,\bar{S}_\mu,\bar{S}_\omega\right) = \mathcal{N}\left(\omega_{c,i}\middle|R_{c,i}S_{\varepsilon_{c,i}}{}^{-1}\left(x_{c,i} - b_{\mu_c}\right), R_{c,i}S_{\varepsilon_{c,i}}{}^{-1}T_{\mu_c}S_{\varepsilon_{c,i}}{}^{-1}R_{c,i} + R_{c,i}\right)$$

$$= \mathcal{N}\left(\omega_{c,i}\middle|b_{\omega_{c,i}}, T_{w_{c,i}}\right)$$

Où :

$$T_{w_{c,i}} = R_{c,i}S_{\varepsilon_{c,i}}{}^{-1}T_{\mu_c}S_{\varepsilon_{c,i}}{}^{-1}R_{c,i} + R_{c,i}$$

Et

$$b_{\omega_{c,i}} = R_{c,i}S_{\varepsilon_{c,i}}{}^{-1}\left(x_{c,i} - b_{\mu_c}\right)$$

L'étape 220 consiste donc à maximiser, par rapport à $S_\mu$ et $S_w$ :

$$\tilde{Q}(\Theta,\overline{\Theta}) \sum_{\substack{c=1 \\ i=1}}^{\substack{nb\ classe, \\ m_c}} \int P\left(Z_c\middle|X_c,\bar{\bar{S}}_\mu,\bar{\bar{S}}_\omega\right)\left(log P(x_{c,i}|\mu_c,\omega_{c,i}) + \log P\left(\mu_c\middle|S_\mu\right)\right.$$

$$\left. + log P(\omega_{c,i}|S_\omega)\right)dZ_c$$

Ceci est réalisé en calculant les gradients et en résolvant $\dfrac{\partial \tilde{Q}(\Theta,\overline{\Theta})}{\partial S_\mu} = 0$ et $\dfrac{\partial \tilde{Q}(\Theta,\overline{\Theta})}{\partial S_\omega} = 0$.

$$\frac{\partial \tilde{Q}(\Theta,\overline{\Theta})}{\partial S_\mu} = \sum_{c=1}^{nb\ classes} \int P(Z_c|X_c,\overline{\Theta}) \frac{\partial \log P\left(\mu_c\middle|S_\mu\right)}{\partial S_\mu} dZ_c$$

$$= \sum_{c=1}^{nb\ classes} \int P(\mu_c|X_c,\overline{\Theta}) \frac{\partial \log P\left(\mu_c\middle|S_\mu\right)}{\partial S_\mu} d\mu_c$$

$$\propto -\frac{1}{2} \sum_{c=1}^{nb\ classes} \int P(\mu_c|X_c,\overline{\Theta}) \left(S_\mu^{-1} - S_\mu^{-1}\mu_c\mu_c^T S_\mu^{-1}\right)d\mu_c$$

$$\propto -\frac{1}{2}\left(nbclasses \times S_\mu^{-1} - S_\mu^{-1} \sum_{c=1}^{nb\ classes} \int P(\mu_c|X_c,\overline{\Theta})\mu_c\mu_c^T d\mu_c S_\mu^{-1}\right)$$

$$\propto -\frac{1}{2}\left(nbclasses \times S_\mu^{-1} - S_\mu^{-1} \sum_{c=1}^{nb\ classes} \left(T_{\mu_c} + b_{\mu_c}b_{\mu_c}{}^T\right) S_\mu^{-1}\right)$$

$$\frac{\partial \tilde{Q}(\Theta,\overline{\Theta})}{\partial S_\mu} = 0 \Rightarrow S_\mu = \frac{1}{nb\ classes} \sum_{c=1}^{nb\ classes} \left(T_{\mu_c} + b_{\mu_c}b_{\mu_c}{}^T\right)$$

Par ailleurs

$$\frac{\partial \tilde{Q}(\Theta,\overline{\Theta})}{\partial S_\omega} = \sum_{\substack{c=1 \\ i=1}}^{\substack{nb\ classe, \\ m_c}} \int P(Z_c|X_c,\overline{\Theta}) \frac{\partial \log P(\omega_{c,i}|S_\omega)}{\partial S_\omega} dZ_c$$

$$= \sum_{\substack{c=1 \\ i=1}}^{\substack{nb\ classe, \\ m_c}} \iint P(\mu_c|X_c,\bar{S}_\mu)P(\omega_{c,i}|x_{c,i},\mu_c,\bar{S}_\omega) \frac{\partial \log P(\omega_{c,i}|S_\omega)}{\partial S_\omega} d\omega_{c,i} \int \dots \int \prod_{\substack{j=1 \\ j\neq i}}^{m_c} P(\omega_{c,j}|x_{c,j},\mu_c,\bar{S}_\omega) d\alpha$$

$$\sum_{\substack{c=1 \\ i=1}}^{\substack{nb\ classe, \\ m_c}} \iint P(\mu_c|X_c,\bar{S}_\mu)P(\omega_{c,i}|x_{c,i},\mu_c,\bar{S}_\omega) d\mu_c \frac{\partial \log P(\omega_{c,i}|S_\omega)}{\partial S_\omega} d\omega_{c,i}$$

$$\sum_{\substack{c=1 \\ i=1}}^{\substack{nb\ classe, \\ m_c}} \int P(\omega_{c,i}|X_c,\bar{S}_\mu,\bar{S}_\omega) \frac{\partial \log P(\omega_{c,i}|S_\omega)}{\partial S_\omega} d\omega_{c,i}$$

$$\propto -\frac{1}{2}\left( \sum_{c=1}^{nb\ classes} m_c S_\omega^{-1} - S_\omega^{-1} \sum_{\substack{c=1 \\ i=1}}^{\substack{nb\ classes, \\ m_c}} \int P(\omega_{c,i}|X_c,\bar{S}_\mu,\bar{S}_\omega)\omega_{c,i}\omega_{c,i}^T d\omega_{c,i} S_\omega^{-1} \right)$$

$$\propto -\frac{1}{2}\left( \sum_{c=1}^{nb\ classes} m_c S_\omega^{-1} - S_\omega^{-1} \sum_{\substack{c=1 \\ i=1}}^{\substack{nb\ classes, \\ m_c}} (T_{\omega_{c,i}} + b_{\omega_{c,i}}b_{\omega_{c,i}}^T) S_\omega^{-1} \right)$$

$$\frac{\partial \tilde{Q}(\Theta,\overline{\Theta})}{\partial S_\omega} = 0 \Rightarrow S_\omega = \frac{1}{\sum_{c=1}^{nb\ classes} m_c} \sum_{\substack{c=1 \\ i=1}}^{\substack{nb\ classes, \\ m_c}} (T_{\omega_{c,i}} + b_{\omega_{c,i}}b_{\omega_{c,i}}^T)$$

L'algorithme d'espérance-maximisation est mis en oeuvre itérativement en calculant successivement au cours de l'étape 210 les variables $T_{\mu_c}, b_{\mu_c}, T_{\omega_{c,i}}$ et $b_{\omega_{c,i}}$, en adaptant les valeurs de $S_\mu$ et $S_\omega$ - et donc de $\overline{\Theta}$ - au cours de l'étape 220 jusqu'à la convergence. A chaque nouvelle itération de l'étape 210, la nouvelle valeur de $\overline{\Theta}$ obtenue à l'étape 220 précédente est réutilisée.

## Revendications

1. Procédé de comparaison de deux données obtenues à partir d'une unité d'acquisition de données (30), mis en oeuvre par des moyens de traitement (11) d'une unité de traitement (10), le procédé comprenant le calcul (100) d'une fonction de similarité entre deux vecteurs de caractéristiques (x,y) des données à comparer, lesdits vecteurs de caractéristiques (x, y) étant des représentations fréquentielles ou spatio-fréquentielles desdites données dont chaque composante dépend d'une ou plusieurs bandes de fréquence,
le procédé comprenant en outre la comparaison (110) d'un résultat du calcul de la fonction de similarité (LR) à un seuil pour déterminer si les données appartiennent à une classe commune,

le procédé étant **caractérisé en ce que** chaque vecteur de caractéristiques d'une donnée est modélisé comme une somme de trois variables gaussiennes indépendantes $\mu + \omega + \varepsilon$, où lesdites variables sont :

- une moyenne $\mu$ d'une classe d'appartenance du vecteur,
- une déviation intrinsèque $\omega$ et
- un bruit $\varepsilon$ d'observation du vecteur,

chaque vecteur de caractéristiques x étant associé à un vecteur de qualités qx comprenant des informations sur le bruit d'observation du vecteur de caractéristiques, chaque composante du vecteur de qualités qx étant générée en correspondance à une composante du vecteur de caractéristiques x, en fonction de la ou des bandes de fréquence associées à ladite composante, et d'un niveau de bruit et/ou d'une résolution pour ladite composante, et **en ce que** la fonction de similarité est calculée à partir des vecteurs de caractéristiques (x,y) et des vecteurs de qualités associés (qx, qy), en fonction des matrices de covariances ($S_\mu$, $S_\omega$, $S_{\varepsilon x}$ $S_{\varepsilon y}$) des composantes des vecteurs de caractéristiques, comprenant une matrice de covariance des moyennes des classes d'appartenance des vecteurs, dite matrice de covariance inter-classe ($S_\mu$), et une matrice de covariance des déviations des vecteurs par rapport aux moyennes de classe, dite matrice de covariance intra-classe ($S_\omega$), et la matrice de covariances du bruit d'observation ($S_{\varepsilon x}$ $S_{\varepsilon y}$) de chaque vecteur de caractéristiques étant obtenue en fonction du vecteur de qualité associé.

2.  Procédé de comparaison de deux images de visages obtenues à partir d'une unité d'acquisition de données (30), mis en oeuvre par des moyens de traitement (11) d'une unité de traitement (10), le procédé comprenant le calcul (100) d'une fonction de similarité entre deux vecteurs de caractéristiques (x,y) des images à comparer, lesdits vecteurs de caractéristiques (x, y) étant des représentations desdites images dont chaque composante correspond à un ou plusieurs points caractéristiques de l'image de visage, le procédé comprenant en outre la comparaison (110) d'un résultat du calcul de la fonction de similarité (LR) à un seuil pour déterminer si les données appartiennent à une classe commune,
le procédé étant **caractérisé en ce que** chaque vecteur de caractéristiques d'une donnée est modélisé comme une somme de trois variables gaussiennes indépendantes $\mu + \omega + \varepsilon$, où lesdites variables sont :

- une moyenne $\mu$ d'une classe d'appartenance du vecteur,
- une déviation intrinsèque $\omega$ et
- un bruit $\varepsilon$ d'observation du vecteur,

chaque vecteur de caractéristiques x étant associé à un vecteur de qualités qx comprenant des informations sur le bruit d'observation du vecteur de caractéristiques, chaque composante du vecteur de qualités qx étant générée en fonction d'une qualité de détection pour le ou les points qui correspondent à une composante donnée du vecteur de caractéristiques x, et **en ce que** la fonction de similarité est calculée à partir des vecteurs de caractéristiques (x,y) et des vecteurs de qualités associés (qx, qy), en fonction des matrices de covariances ($S_\mu$, $S_\omega$, $S_{\varepsilon x}$ $S_{\varepsilon y}$) des composantes des vecteurs de caractéristiques, comprenant une matrice de covariance des moyennes des classes d'appartenance des vecteurs, dite matrice de covariance inter-classe ($S_\mu$), et une matrice de covariance des déviations des vecteurs par rapport aux moyennes de classe, dite matrice de covariance intra-classe ($S_\omega$), et la matrice de covariances du bruit d'observation ($S_{\varepsilon x}$ $S_{\varepsilon y}$) de chaque vecteur de caractéristiques étant obtenue en fonction du vecteur de qualité associé.

3.  Procédé de comparaison selon l'une des revendications précédentes, dans lequel la fonction de similarité (LR) est le logarithme du ratio entre la densité de probabilité $P(x,y|H_{sim},S_{\varepsilon x},S_{\varepsilon y})$ des vecteurs de caractéristiques, avec les vecteurs appartenant à une même classe, et la densité de probabilité $P(x,y|H_{dis},S_{\varepsilon x},S_{\varepsilon y})$ des vecteurs de caractéristiques, avec les vecteurs appartenant à deux classes distinctes.

4.  Procédé de comparaison selon l'une des revendications précédentes, comprenant en outre la mise en oeuvre (200) d'un algorithme d'apprentissage pour la détermination des matrices de covariances ($S_\mu$, $S_\omega$) inter-classe et intra-classe.

5.  Procédé de comparaison selon la revendication 4, dans lequel l'algorithme d'apprentissage est un algorithme de type espérance - maximisation.

6.  Procédé de comparaison selon l'une des revendications précédentes, dans lequel la fonction de similarité est fournie par la formule :

$$LR\left(x,y\Big|S_{\varepsilon_x},S_{\varepsilon_y}\right)$$

$$= x^T\left(A - \left(S_\mu + S_\omega + S_{\varepsilon_x}\right)^{-1}\right)x + y^T\left(C - \left(S_\mu + S_\omega + S_{\varepsilon_y}\right)^{-1}\right)y$$

$$+ 2x^T By - \log\left|S_\mu + S_\omega + S_{\varepsilon_x}\right| - \log|A| + constante$$

où

$$A = \left(S_\mu + S_\omega + S_{\varepsilon_x} - S_\mu\left(S_\mu + S_\omega + S_{\varepsilon_y}\right)^{-1}S_\mu\right)^{-1}$$

$$B = -AS_\mu\left(S_\mu + S_\omega + S_{\varepsilon_y}\right)^{-1}$$

$$C = \left(S_\mu + S_\omega + S_{\varepsilon_y}\right)^{-1}\left(I + S_\mu AS_\mu\left(S_\mu + S_\omega + S_{\varepsilon_y}\right)^{-1}\right)$$

et où $S_\mu$ est la matrice de covariance des moyennes des classes, $S_\omega$ est la matrice de covariances des déviations par rapport à une moyenne, et $S_{\varepsilon x}$ et $S_{\varepsilon y}$ sont les matrices de covariances des bruits d'observation respectivement des vecteurs x et y.

**7.** Procédé de comparaison selon l'une des revendications précédentes, dans lequel les données informatiques issues de l'unité d'acquisition de données sont des données représentatives d'objets physiques ou de grandeurs physiques.

**8.** Procédé de comparaison selon la revendication 7, dans lequel les données informatiques issues de l'unité d'acquisition de données sont des images, et les vecteurs de caractéristiques sont obtenus par application d'au moins un filtre sur les images.

**9.** Produit programme d'ordinateur, comprenant des instructions de code pour la mise en oeuvre du procédé selon l'une des revendications précédentes, quand il est exécuté par des moyens de traitement (11) d'une unité de traitement (10).

**10.** Système (1) comprenant :

- une base de données (20) comprenant une pluralité de données dites étiquettées,
- une unité (30) d'acquisition de données, et
- une unité de traitement (10), comprenant des moyens de traitement (11) adaptés pour construire, à partir de deux données, deux vecteurs de caractéristiques (x,y) et deux vecteurs de qualités (qx, qy) associés, ladite unité de traitement étant en outre adaptée pour comparer les données par la mise en oeuvre du procédé selon l'une des revendications 1 à 8.

**Patentansprüche**

**1.** Verfahren zum Vergleich von zwei Datenelementen, die ausgehend von einer Datenerfassungseinheit (30) erhalten werden, das durch Verarbeitungsmittel (11) einer Verarbeitungseinheit (10) durchgeführt wird, wobei das Verfahren die Berechnung (100) einer Ähnlichkeitsfunktion zwischen zwei Merkmalsvektoren (x, y) der zu vergleichenden Daten umfasst, wobei die Merkmalsvektoren (x, y) Frequenz- oder Raum-Frequenz-Darstellungen der Daten sind, von denen jede Komponente von einem oder mehreren Frequenzbändern abhängig ist, wobei das Verfahren ferner den Vergleich (110) eines Ergebnisses der Berechnung der Ähnlichkeitsfunktion (LR) mit einem Schwellenwert umfasst, um zu bestimmen, ob die Daten zu einer gemeinsamen Klasse gehören,

wobei das Verfahren **dadurch gekennzeichnet ist, dass** jeder Merkmalsvektor eines Datenelements als eine Summe von drei unabhängigen Gaußschen Variablen $\mu + \omega + \varepsilon$ modelliert ist, wobei die Variablen Folgendes sind:

- ein Mittelwert $\mu$ einer Zugehörigkeitsklasse des Vektors,
- eine Eigenabweichung $\omega$ und
- ein Beobachtungsrauschen $\varepsilon$ des Vektors,

wobei jeder Merkmalsvektor x einem Qualitätsvektor qx zugehörig ist, der Informationen über das Beobachtungsrauschen des Merkmalsvektors umfasst, wobei jede Komponente des Qualitätsvektors qx einer Komponente des Merkmalsvektors x entsprechend in Abhängigkeit von dem oder den der Komponente zugehörigen Frequenzbändern und einem Rauschpegel und/oder einer Auflösung für die Komponente erzeugt wird,
und dadurch, dass die Ähnlichkeitsfunktion ausgehend von Merkmalsvektoren (x, y) und zugehörigen Qualitätsvektoren (qx, qy) in Abhängigkeit von Kovarianzmatrizen ($S_\mu$, $S_\omega$, $S_{\varepsilon x}$, $S_{\varepsilon y}$) der Merkmalsvektorkomponenten berechnet wird, die eine Kovarianzmatrix der Mittelwerte der Zugehörigkeitsklassen der Vektoren, die sogenannte Zwischenklassen-Kovarianzmatrix ($S_\mu$), und eine Kovarianzmatrix der Abweichungen der Vektoren in Bezug auf die Klassenmittelwerte, die sogenannte In-Klassen-Kovarianzmatrix ($S_\omega$), umfassen,
und die Kovarianzmatrix des Beobachtungsrauschens ($S_{\varepsilon x}$, $S_{\varepsilon y}$) von jedem Merkmalsvektor in Abhängigkeit von dem zugehörigen Qualitätsvektor erhalten wird.

2. Verfahren zum Vergleich von zwei Bildern von Gesichtern, die ausgehend von einer Datenerfassungseinheit (30) erhalten werden, das durch Verarbeitungsmittel (11) einer Verarbeitungseinheit (10) durchgeführt wird, wobei das Verfahren die Berechnung (100) einer Ähnlichkeitsfunktion zwischen zwei Merkmalsvektoren (x, y) der zu vergleichenden Bilder umfasst, wobei die Merkmalsvektoren (x, y) Darstellungen der Bilder sind, von denen jede Komponente einem oder mehreren Merkmalspunkten des Gesichtsbildes entspricht,
wobei das Verfahren ferner den Vergleich (110) eines Ergebnisses der Berechnung der Ähnlichkeitsfunktion (LR) mit einem Schwellenwert umfasst, um zu bestimmen, ob die Daten zu einer gemeinsamen Klasse gehören,
wobei das Verfahren **dadurch gekennzeichnet ist, dass** jeder Merkmalsvektor eines Datenelements als eine Summe von drei unabhängigen Gaußschen Variablen $\mu + \omega + \varepsilon$ modelliert ist, wobei die Variablen Folgendes sind:

- ein Mittelwert $\mu$ einer Zugehörigkeitsklasse des Vektors,
- eine Eigenabweichung $\omega$ und
- ein Beobachtungsrauschen $\varepsilon$ des Vektors,

wobei jeder Merkmalsvektor x einem Qualitätsvektor qx zugehörig ist, der Informationen über das Beobachtungsrauschen des Merkmalsvektors umfasst, wobei jede Komponente des Qualitätsvektors qx in Abhängigkeit von einer Detektionsqualität für den oder die Punkte erzeugt wird, die einer gegebenen Komponente des Merkmalsvektors x entsprechen,
und dadurch, dass die Ähnlichkeitsfunktion ausgehend von Merkmalsvektoren (x, y) und zugehörigen Qualitätsvektoren (qx, qy) in Abhängigkeit von den Kovarianzmatrizen ($S_\mu$, $S_\omega$, $S_{\varepsilon x}$, $S_{\varepsilon y}$) der Merkmalsvektorkomponenten berechnet wird, die eine Kovarianzmatrix der Mittelwerte der Zugehörigkeitsklassen der Vektoren, die sogenannte Zwischenklassen-Kovarianzmatrix ($S_\mu$), und eine Kovarianzmatrix der Abweichungen der Vektoren in Bezug auf die Klassenmittelwerte, die sogenannte In-Klassen-Kovarianzmatrix ($S_\omega$), umfassen,
und die Kovarianzmatrix des Beobachtungsrauschens ($S_{\varepsilon x}$, $S_{\varepsilon y}$) von jedem Merkmalsvektor in Abhängigkeit von dem zugehörigen Qualitätsvektor erhalten wird.

3. Vergleichsverfahren nach einem der vorhergehenden Ansprüche, wobei die Ähnlichkeitsfunktion (LR) der Logarithmus des Verhältnisses zwischen der Wahrscheinlichkeitsdichte ($P(x,y|H_{sim},S_{\varepsilon x},S_{\varepsilon y})$) der Merkmalsvektoren, wobei die Vektoren zu einer selben Klasse gehören, und der Wahrscheinlichkeitsdichte ($P(x,y|H_{dis},S_{\varepsilon x},S_{\varepsilon y})$) der Merkmalsvektoren ist, wobei die Vektoren zu zwei getrennten Klassen gehören.

4. Vergleichsverfahren nach einem der vorhergehenden Ansprüche, das ferner das Durchführen (200) eines Lernalgorithmus für die Bestimmung der Zwischenklassen- und In-Klassen-Kovarianzmatrizen ($S_\mu$, $S_\omega$) umfasst.

5. Vergleichsverfahren nach Anspruch 4, wobei der Lernalgorithmus ein Algorithmus vom Typ Erwartung-Maximierung ist.

6. Vergleichsverfahren nach einem der vorhergehenden Ansprüche, wobei die Ähnlichkeitsfunktion durch die folgende Formel geliefert wird:

$$\mathrm{LR}\left(x, y \middle| S_{\varepsilon x}, S_{\varepsilon y}\right)$$
$$= x^T\left(A - \left(S_\mu + S_\omega + S_{\varepsilon x}\right)^{-1}\right)x + y^T\left(C - \left(S_\mu + S_\omega + S_{\varepsilon y}\right)^{-1}\right)y$$
$$+ 2x^T B y - log\left|S_\mu + S_\omega + S_{\varepsilon x}\right| - log|A| + Konstante$$

wo

$$A = \left(S_\mu + S_\omega + S_{\varepsilon x} - S_\mu \left(S_\mu + S_\omega + S_{\varepsilon x}\right)^{-1} S_\mu\right)^{-1}$$

$$B = -A S_\mu\left(S_\mu + S_\omega + S_{\varepsilon y}\right)^{-1}$$

$$C = \left(S_\mu + S_\omega + S_{\varepsilon y}\right)^{-1}\left(I + S_\mu A S_\mu\left(S_\mu + S_\omega + S_{\varepsilon y}\right)^{-1}\right)$$

und wo $S_\mu$ die Kovarianzmatrix der Mittelwerte der Klassen ist, $S_\omega$ die Kovarianzmatrix der Abweichungen in Bezug auf einen Mittelwert ist, und $S_{\varepsilon x}$ und $S_{\varepsilon y}$ die Kovarianzmatrizen des Beobachtungsrauschens der Vektoren x beziehungsweise y sind.

7. Vergleichsverfahren nach einem der vorhergehenden Ansprüche, wobei die elektronischen Daten, die von der Datenerfassungseinheit stammen, Daten sind, die für physikalische Objekte oder physikalische Größen charakteristisch sind.

8. Vergleichsverfahren nach Anspruch 7, wobei die elektronischen Daten, die von der Datenerfassungseinheit stammen, Bilder sind und die Merkmalsvektoren durch Anwendung von mindestens einem Filter auf die Bilder erhalten werden.

9. Computerprogrammprodukt, das Codebefehle für die Durchführung des Verfahrens nach einem der vorhergehenden Ansprüche umfasst, wenn es durch die Verarbeitungsmittel (11) einer Verarbeitungseinheit (10) ausgeführt wird.

10. System (1), umfassend:

- eine Datenbank (20), die mehrere sogenannte markierte Datenelemente umfasst,
- eine Datenerfassungseinheit (30), und
- eine Verarbeitungseinheit (10), die Verarbeitungsmittel (11) umfasst, die angepasst sind, um ausgehend von zwei Datenelementen zwei Merkmalsvektoren (x, y) und zwei zugehörige Qualitätsvektoren (qx, qy) zu konstruieren, wobei die Verarbeitungseinheit ferner angepasst ist, um die Daten durch die Durchführung des Verfahrens nach einem der Ansprüche 1 bis 8 zu vergleichen.

**Claims**

1. A method for comparing two data obtained from a data acquisition unit (30), implemented by processing means (11) of a processing unit (10), the method comprising the computation (100) of a similarity function between two feature vectors (x, y) of the data to be compared, said feature vectors (x, y) being frequency or spatial-frequency representations of said data, each component of which depends on one or several frequency bands,
the method further comprising the comparison (110) of a result of the computed similarity function (LR) with a threshold to determine whether the data belong to a common class,
the method being **characterized in that** each feature vector of a datum is modelled as a sum of three independent Gaussian variables $\mu + \omega + \varepsilon$, wherein said variables are:

- a mean $\mu$ of a class to which the vector belongs,
- an intrinsic deviation $\omega$ and
- an observation noise $\varepsilon$ of the vector,

each feature vector x being associated with a quality vector qx comprising information on the observation noise of the feature vector, each component of the quality vector qx being generated corresponding to a component of the feature vector x, depending on the frequency bands associated with said component, and a noise level and/or a resolution for said component,

and **in that** the similarity function is computed from the feature vectors (x, y) and associated quality vectors (qx, qy), as a function of the covariance matrices ($S_\mu$, $S_\omega$, $S_{\varepsilon x}$, $S_{\varepsilon y}$) of the components of the feature vectors, comprising a covariance matrix of the means of the classes to which the vectors belong, called inter-class covariance matrix ($S_\mu$), and a covariance matrix of the vector deviations from the class means, called intra-class covariance matrix ($S_\omega$), and the covariance matrix of the observation noise ($S_{\varepsilon x}$, $S_{\varepsilon y}$) of each feature vector being obtained as a function of the associated quality vector.

2. A method for comparing two images of faces obtained from a data acquisition unit (30), implemented by processing means (11) of a processing unit (10), the method comprising the computation (100) of a similarity function between two feature vectors (x, y) of the images to be compared, said feature vectors (x, y) being representations of said images, each component of which corresponds to one or several characteristic points of the face image,

the method further comprising the comparison (110) of a result of the computed similarity function (LR) with a threshold to determine whether the data belong to a common class,

the method being **characterized in that** each feature vector of a datum is modelled as a sum of three independent Gaussian variables $\mu+\omega+\varepsilon$, wherein said variables are:

- a mean $\mu$ of a class to which the vector belongs,
- an intrinsic deviation $\omega$ and
- an observation noise $\varepsilon$ of the vector,

each feature vector x being associated with a quality vector qx comprising information on the observation noise of the feature vector, each component of the quality vector qx being generated as a function of a detection quality for the points that correspond(s) to a given component of the feature vector x,

and **in that** the similarity function is computed from the feature vectors (x, y) and the associated quality vectors (qx, qy), as a function of the covariance matrices ($S_\mu$, $S_\omega$, $S_{\varepsilon x}$, $S_{\varepsilon y}$) of the feature vector components, comprising a covariance matrix of the means of the classes to which the vectors belong, called the inter-class covariance matrix ($S_\mu$), and a covariance matrix of the vector deviations from the class means, called intra-class covariance matrix ($S_\omega$), and the covariance matrix of the observation noise ($S_{\varepsilon x}$, $S_{\varepsilon y}$) of each feature vector being obtained as a function of the associated quality vector.

3. The comparison method according to any of the preceding claims, wherein the similarity function (LR) is the logarithm of the ratio between the probability density $P(x,y|H_{sim},S_{\varepsilon x},S_{\varepsilon y})$ of the feature vectors, with the vectors belonging to the same class, and the probability density $P(x,y|H_{dis}S_{\varepsilon x},S_{\varepsilon y})$ of the feature vectors, with the vectors belonging to two distinct classes.

4. The comparison method according to any of the preceding claims, further comprising the implementation (200) of a learning algorithm to determine the inter-class and intra-class covariance matrices ($S_\mu$, $S_\omega$).

5. The comparison method according to claim 4, wherein the learning algorithm is an expectation-maximization-type algorithm.

6. The comparison method according to any of the preceding claims, wherein the similarity function is provided by the formula:

$$\mathrm{LR}\left(x,y|S_{\varepsilon x},S_{\varepsilon y}\right)$$
$$= x^T\left(A - \left(S_\mu + S_\omega + S_{\varepsilon x}\right)^{-1}\right)x + y^T\left(C - \left(S_\mu + S_\omega + S_{\varepsilon y}\right)^{-1}\right)y$$
$$+ 2x^T B y - log\left|S_\mu + S_\omega + S_{\varepsilon x}\right| - log|A| + constant$$

wherein

$$A = \left(S_\mu + S_\omega + S_{\varepsilon x} - S_\mu \left(S_\mu + S_\omega + S_{\varepsilon x}\right)^{-1} S_\mu\right)^{-1}$$

$$B = -AS_\mu\left(S_\mu + S_\omega + S_{\varepsilon y}\right)^{-1}$$

$$C = \left(S_\mu + S_\omega + S_{\varepsilon y}\right)^{-1}\left(I + S_\mu AS_\mu\left(S_\mu + S_\omega + S_{\varepsilon y}\right)^{-1}\right)$$

and wherein $S_\mu$ is the covariance matrix of the means of the classes, $S_\omega$ is the covariance matrix of the deviations from a mean, and $S_{\varepsilon x}$ and $S_{\varepsilon y}$ are the covariance matrices of the observation noises of the vectors x and y respectively.

7. The comparison method according to any of the preceding claims, wherein the computer data derived from the data acquisition unit are data representing physical objects or physical values.

8. The comparison method according to claim 7, wherein the computer data derived from the data acquisition unit are images, and the feature vectors are obtained by applying at least one filter on the images.

9. A computer program product, comprising code instructions for executing the method according to any of the preceding claims, when it is executed by processing means (11) of a processing unit (10).

10. A system (1) comprising:

- a database (20) comprising a plurality of data called labelled data,
- a data acquisition unit (30), and
- a processing unit (10) comprising processing means (11) adapted to construct, from two data items, two feature vectors (x, y) and two associated quality vectors (qx, qy), said processing unit being further adapted to compare the data by implementing the method according to any of claims 1 to 8.

**FIG. 1**

Calcul fonction de similarités — 100

Comparaison seuil — 110

Optimisation des paramètres

Estimation — 210

Maximisation — 220

— 200

**FIG. 2**

**RÉFÉRENCES CITÉES DANS LA DESCRIPTION**

**Documents brevets cités dans la description**

- FR 2998402

**Littérature non-brevet citée dans la description**

- **D. CHEN ; X. CAO ; L. WANG ; F. WEN ; J. SUN.** Bavesian Face Revisited : A Joint Formulation. *EC-CV,* 2012
- **CHEN et al.** Blessing of Dimensionality : High-dimensional Feature and Its Efficient Compression for Face Vérification. *VCPR,* 2013
- **RAPP et al.** Blessing of Dimensionality : « Multiple kernel learning SVM and statistical validation for facial landmark détection ». *Automatic Face & Gesture Récognition,* 2011
- **DANTONE et al.** Real-time Facial Feature Detection using Conditional Rregression Forests. *CVPR,* 2012